# EUROPEAN PATENT SPECIFICATION

(11) **EP 3 665 123 B1**
(45) Date of publication and mention of the grant of the patent: **09.08.2023**
(21) Application number: 18752489.7
(22) Date of filing: 09.08.2018
(51) Int. Cl.: C01B 3/00, C10L 3/10, F17C 1/00, F17C 11/00

(54) **METHOD AND APPARATUS FOR CONTROLLABLE STORAGE OF HYDROGEN**
VERFAHREN UND VORRICHTUNG ZUR STEUERBAREN SPEICHERUNG VON WASSERSTOFF
PROCÉDÉ ET APPAREIL POUR LE STOCKAGE RÉGLABLE D'HYDROGÈNE

(30) Priority: 10.08.2017 GB 201712814
(43) Date of publication of application: 17.06.2020
(73) Proprietor: University College Dublin, National University of Ireland, Dublin 4 (IE)
(72) Inventor: ENGLISH, Niall, Belfield Dublin 7 (IE); BURNHAM, Christian, Belfield Dublin 4 (IE)
(74) Representative: Mewburn Ellis LLP
(86) International application number: PCT/EP2018/071626
(87) International publication number: WO 2019/030323

(56) References cited:
- US-A1- 2009 035 627
- US-A1- 2009 242 382
- US-A1- 2013 115 536
- US-B1- 6 214 175

## Description

### FIELD OF THE INVENTION

The invention relates to the use of clathrate hydrate structures to store hydrogen gas. In particular, the invention relates to methods for controlling the release and introduction (or uptake) of hydrogen gas from or to clathrate hydrates in a controllable manner.

### BACKGROUND TO THE INVENTION

It is well established that known techniques for converting solar radiation to hydrogen can achieve efficiencies that could in principle provide the basis of a hydrogen-based energy economy. For example, harvesting about 0.3-0.5% of incident solar radiation (the total being ~120,000 TW) and converting to H₂ at a solar-to-hydrogen efficiency of around 9-10% would meet the domestic, transport and industrial needs of the world's population.

However, in order to make production of hydrogen (from solar energy or any other source) an economically sustainable reality, the problem of economically viable, large-scale (i.e. capable of meaningful contribution to the grid) hydrogen storage is still to be addressed. In particular, there is a need for a storage technique that facilitates on-demand use, and ideally which can be incorporated into an existing gas-transmission network.

Certain chemical storage techniques for hydrogen are known, such as those based on metal hydrides (e.g. sodium alanate, magnesium hydride, lanthanum nickel hydride) or ammonia as a vector. However, such techniques typically exhibit unfavourable energy-balance properties. From the standpoint of providing large-scale, inexpensive, low-energy storage, it is more likely that physical storage in cheap and readily available materials will provide a feasible solution.

One type of known physical storage for hydrogen is clathrate hydrates. These structures are non-stoichiometric inclusion compounds in which a host lattice composed of water molecules encages small guest molecules in cavities. The empty lattice is unstable; its existence is due to hydrogen-bond stabilisation resulting from enclathration of trapped solutes.

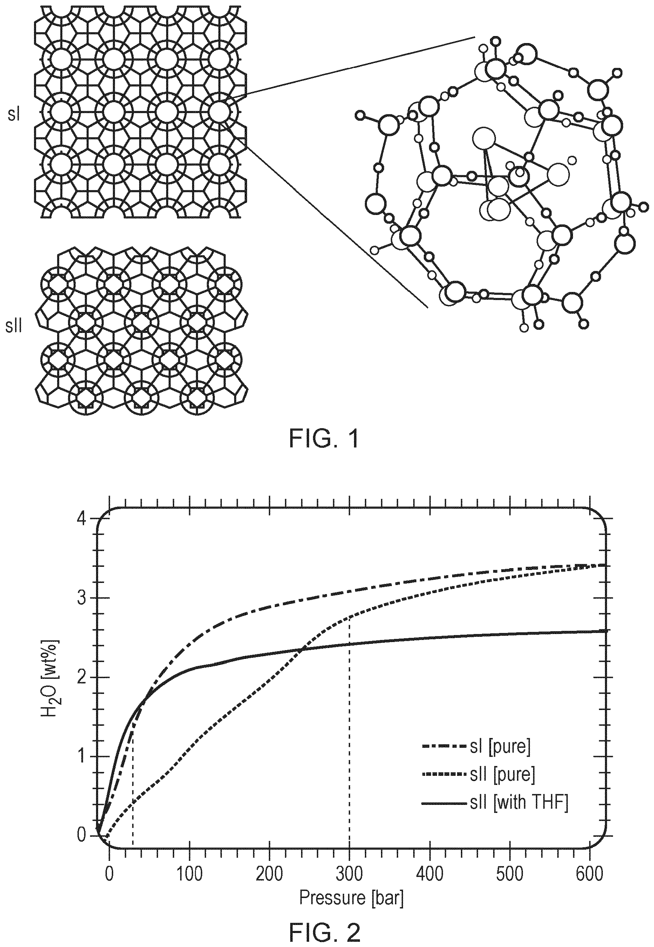

Fig. 1 shows a lattice configuration for the sI and sII polymorph of clathrate hydrate. It has been shown that hydrogen can be stored in large quantities approaching 6.5 wt % in such structures under high pressure and low temperature conditions (200 MPa and 250 K). Both the sI and sII polymorphs shown in Fig. 1 have a cubic structure and each cage can accommodate one (or more) guest molecules, with two or more H2 molecules occupying a cage. The sII hydrates generally accommodate pure hydrogen, but the presence of other gases like tetrahydrofuran (THF) or methane means that mixed hydrates can be adopted at lower pressures.

Thermodynamic models have been used to predict storage capacity of clathrate hydrate structures under both pure and mixed conditions (with tetrahydrofuran occupying large sII cavities in the latter case). Fig. 2 is a graph that illustrates how storage capacity (in terms of % by weight of hydrogen) varies with pressure, based on these thermodynamic models. Fig. 2 highlight pressure values of 3 MPa (30 bar) and 30 MPa (300 bar), which are representative of storage pressures already available in most industrial pressurised hydrogen plants. From Fig. 2, it can be seen that the ~1.5 wt% capacity at 3 MPa in the mixed THF-H2 case offers a good compromise between capacity and need to maintain pressurisation, in terms of pump cost and pressure vessel wall thickness.

In recent years, studies have been performed concerning proof-of-concept industrial-scale hydrogen storage in clathrate hydrates. These studies show that storage capacity under hydrate conditions is well in excess of liquefied mass-storage capacity under cryogenic conditions and of gas storage. At 3 MPa, mixed hydrate offers capacity of 16.5 kg/m³ or 1.7 GJ/m³, which is much higher than compressed gas (~1.5 kg/m³). At 30 MPa, sII pure H₂ hydrate offers ~2.8 wt% storage, i.e. ~25 kg/m³ or 2.6 GJ/m³. This compares favourably with liquefied mass-storage capacity under cryogenic conditions (~70 kg/m³) and gas storage (~13 kg/m³), especially taking into account the vast capital and running expenses of cryogenic storage facilities, and the associated safety concerns.

US 2013/0115536 discloses a hydrogen generator in which induction heating is used to release hydrogen gas from a hydrogen-containing material.

US 6,214,175 discloses a process for recovering gas from a clathrate hydrate by using electromagnetic radiation to dissociate the clathrate hydrate.

### SUMMARY OF THE INVENTION

At its most general, the present invention provides a method and apparatus for controlling gas storage in a clathrate hydrate structure through application of an electromagnetic field. The applied field can be used to control release of gas from the clathrate hydrate structure and/or introduction (also referred to as uptake) of gas into the clathrate hydrate structure. The electromagnetic field is arranged to promote "hopping" of gas molecules between and out of retaining pockets, which are commonly referred to as cages or cavities, in the clathrate lattice, e.g., by stimulating vibrations in the lattice that cause apertures into the retaining pockets to flex open. Advantageously, the electromagnetic field may have properties that are selected to promote an increase in the rate of gas release or gas uptake without causing dissociation of the lattice. In this scenario, the invention can provide an energy-efficient, rechargeable on-demand supply system for any gas that can be retained within a clathrate hydrate structure. The invention may find particular utility in the storage and controllable release of hydrogen.

According to a first aspect of the invention, there is provided a method for releasably storing hydrogen gas as set out in claim 1. The method comprises: forming a clathrate hydrate structure within a storage volume, the clathrate hydrate structure comprising a lattice having a plurality of gas molecule-retaining cavities in which molecules of hydrogen gas to be stored are trapped; and applying an electromagnetic field to the storage volume to controllably release or introduce the hydrogen gas from or to the clathrate hydrate structure. The method may enable the rate of release or uptake of the gas to be optimised. Applying the electromagnetic field has the effect of promoting or stimulating transfer of the gas into or out of the clathrate hydrate structure at a rate that exceeds the natural "leakage" or diffusion of gas. Whether gas is released or introduced into the clathrate hydrate depends on the surrounding environment. For example, if the surrounding environment is provided by a higher pressure hydrogen source, there will be a net uptake of hydrogen to the clathrate hydrate structure.

For energy-rich gas, such as hydrogen, the amount of energy made available by this technique may far exceed the energy required to maintain the clathrate hydrate structure and generate the electromagnetic field. The method thus provides an energy-efficient and scalable means for storing and releasing gas. As explained in more detail below, the method may also provide for the use of electromagnetic fields to stimulate the release and uptake of gas into the lattice by exciting cage-face flexing without causing the lattice to dissociate.

Herein, reference to clathrate hydrate may mean any crystalline water-based material that is capable of trapping molecules within cavities formed in the crystal lattice structure. The lattice may have a Type I (sI) or a Type II (sII) crystal structure, or a mixture of both. Other polymorph types can be used, such as sH. In general, any cage-containing lattice structure that is defined by polar molecules can be stimulated by electromagnetic fields in the manner described herein, and it is to be understood that such lattice structures fall within the intended scope of this disclosure.

The clathrate hydrate structure may be formed in the presence of a primer gas that provides molecules to fill some or all of the cavities to ensure that the clathrate hydrate structure is stable. The primer gas may be the same or different from the gas that is to be stored. For example, the primer gas may be propane, e.g. for filling the larger cavities in an sII structure, whereas the hydrogen gas to be stored is supplied separately. The gas to be stored may be supplied to the storage volume as a source gas. The clathrate hydrate structure may act as a filter to retain only some of the (e.g. smaller) molecules in the source gas. Thus, if the gas to be stored is hydrogen, the source gas may contain molecules other than hydrogen, but these will effectively be filter out by the clathrate hydrate structure if they are too large to enter the cavities in the lattice. A result of this filtering effect is that the gas released from the clathrate hydrate structure has a high level of purity.

The clathrate hydrate structure may be formed in a conventional manner, e.g. by mixing water with the primer gas under suitable temperature and pressure conditions. The source gas may be applied after the clathrate hydrate structure has formed.

The method may include storing the gas within the clathrate hydrate structure in the absence of the electromagnetic field. Temperature and pressure conditions in the storage volume may be selected to strike an optimal balance between gas leakage from the clathrate hydrate structure and an energy cost of maintaining those temperature and pressure conditions. The storage volume may be located in a naturally-occurring high pressure location, such as an underwater storage facility or the like.

The method may thus provide an "on-demand" gas supply system, in which gas is released from the clathrate hydrate structure by applying the electromagnetic field. Similarly, the electromagnetic field as disclosed herein may be used to enhance the uptake rate of gas into already-existing hydrate structures.

The electromagnetic field may have properties selected to enhance the release of the gas. The selected properties may include field strength and frequency. As discussed in more detail below, the underlying principle of the invention is to use the external electromagnetic field to stimulate oscillation and "stretching" of the lattice (and in particular the hexagonal faces of the sI and sII polymorphs) in a manner that facilitates the gas molecules' ability to "hop" out of or between cages.

The frequency of the electromagnetic field may be selected to be stimulate lattice oscillations that cause desired stretching of the "cages" within the clathrate hydrate structure. For example, the frequency of the electromagnetic field may be of the same order as the natural vibration or libration frequency of the lattice, and in particular of a hexagon facet that makes up each cage within the lattice. The electromagnetic field may be a microwave field, e.g. having a frequency of 1 GHz or more, preferably in the range 1 to 5 GHz, more preferably around 2.45 GHz.

The field intensity (i.e. field strength) itself is selected to stimulate vibrations. Preferably the field intensity is selected to minimise adverse effects on the lattice, such as dissociation. For example, a field strength of the electromagnetic field may be three or more magnitudes less than an intrinsic field of the clathrate hydrate structure lattice.

The amplitude of the field strength is related to the uptake rate and/or release rate of gas. Thus, the method may include adjusting a field strength of the electromagnetic field to control a release rate or an uptake rate of the gas from or to the clathrate hydrate structure. The field strength of the electromagnetic field may be adjustable in a range from 0 to 1% of an intrinsic field of the clathrate hydrate structure lattice. For example, a root mean square amplitude of the field strength of the electromagnetic field may be adjustable within the range 0.000001 to 0.01 V/Å.

The electromagnetic field may be applied in a continuous or a pulsed manner. Pulsed application of the field may benefit from the natural vibration of the lattice. In other words, each pulse of electromagnetic energy may stimulate the lattice to vibrate, with those vibration decaying over a relaxation time. The duty cycle of the pulses may be selected based on the relaxation time to preserve vibrations in the lattice in an energy-efficient manner.

The method may include monitoring temperature and/or pressure conditions in the storage volume. The temperature and pressure conditions may reflect both storage conditions for the clathrate and a transfer rate of the gas (i.e. an uptake rate or a release rate depending on the conditions of use). The method may include determining a transfer rate of the gas based on the temperature and pressure conditions, and providing a feedback signal for controlling the electromagnetic field based on the determined transfer rate. In this way, the transfer rate can be maintained at a selected or predetermined level.

The method may include detecting a temperature in the storage volume, and operating a coolant system based on the detected temperature to control the temperature condition in the storage volume. A clathrate hydrate structure with mixed cavity occupation (e.g. by propane and hydrogen) may be stored at a refrigerated temperature, e.g. equal to or less than 277 K, preferably equal to or less than 260 K, and pressure equal to or more than 3 MPa.

In a second aspect, the invention provides an apparatus for releasably storing hydrogen gas as set out in claim 12. The apparatus comprises: a pressure vessel defining a storage volume; a clathrate hydrate structure contained in the storage volume under pressurised conditions, the clathrate hydrate structure comprising a lattice having a plurality of gas molecule retaining cavities in which molecules of hydrogen gas to be stored are trapped; an electromagnetic field generator having one or more field emitters arranged to emit a substantially uniform electromagnetic field across the storage volume to controllably release the hydrogen gas from the clathrate hydrate structure; and an outlet communicably connectable with the storage volume to permit the released hydrogen gas to exit the vessel.

The apparatus may be scalable to provide large scale (i.e. industrial scale) gas storage. The vessel may also be suitable for long term gas storage. In one example, the apparatus may be used to store hydrogen gas to provide a seasonally-dependent energy resource that can be switched into a national gas transmission network. The outlet may be directly connectable to such a network (e.g. by a controllable valve). Alternatively or additionally, the outlet may be arranged to supply gas to one or more fuel cells.

The apparatus may comprise a controller arranged to selectively adjust a field strength of the electromagnetic field to control a release rate of the gas from the clathrate hydrate structure. The field strength may be zero, whereby the apparatus operates simply as storage. Upon applying the electromagnetic field and opening the outlet, gas can be released at a controllable rate.

The field generator may be any suitable structure for provide an electromagnetic field within the storage volume. For example, the field generator may comprise a magnetron or the like for generating a microwave electromagnetic energy. The field generator includes one or more field emitters, e.g. coils or the like. The field emitters may be disposed within or around the storage volume. The field emitters are arranged to provide a substantially uniform field within the storage volume. The field generator may include integrated intelligent control, e.g. capable of adjusting a field intensity of the electromagnetic field based on a feedback signal indicative of one or more properties of the storage volume.

The apparatus may comprise a temperature sensor (e.g. thermocouple or the like) arranged to monitor a temperature of the storage volume. The apparatus may comprise a pressure sensor (e.g. pressure transducer or the like) arranged to monitor a pressure of the storage volume. The temperature sensor and pressure sensor may be communicably connected to the controller, whereby the controller is arranged to adjust the field strength of the electromagnetic field based on detected temperature and pressure conditions in the storage volume.

The apparatus may comprise a coolant system arranged to deliver a coolant to the vessel to maintain a temperature in the storage volume. The coolant system may be controllable by the controller, e.g. based on a signal from the temperature sensor.

The clathrate hydrate structure in the vessel may be rechargeable, i.e. may be capable of being reloaded with gas after a period of gas release. The uptake rate of gas being reloaded into the lattice can be enhanced and optimised by exposure to an electromagnetic field, without dissociation of the lattice, as discussed above. The apparatus may include an inlet communicably connectable with the storage volume to introduce a source gas, which may comprise the gas to be stored.

The clathrate hydrate structure may be formed in situ within the vessel. The apparatus may include a rocker mechanism arranged to agitate the vessel to promote clathrate hydrate formation.

### BRIEF DESCRIPTION OF THE DRAWINGS

Embodiments of the invention are described in detail below with reference to the accompanying drawings, in which:
Fig. 1 shows lattice structure of the sI and sII polymorph clathrate hydrates together with an enlargement of multiply-H₂-occupied cage;
Fig. 2 is a graph showing how H₂ storage capacity in a clathrate hydrate varies with pressure;
Fig. 3A is a graph showing a simulated change in the number of hydrate-like water molecules in hydrate cluster upon application of a range of electromagnetic field strengths;
Fig. 3B is a graph showing the results of mapping the graph of Fig. 3A into a macroscopic scenario;
Fig. 4 is a schematic diagram of a feedback control system for on-demand hydrogen release from pure/mixed hydrogen hydrates;
Fig. 5 is a schematic of an experimental set up to demonstrate controllable release and recharge of hydrogen in a clathrate hydrate according to the principles of the present invention; and
Fig. 6 is a graph showing how H₂ hop rate increases with respect to a zero-field situation with increasing field intensity.

### DETAILED DESCRIPTION; FURTHER OPTIONS AND PREFERENCES

The present invention relates in general to a technique for controlling release and reloading of clathrate hydrates in an energy-efficient manner. The technique is of particular interest for hydrogen storage and release, as it provides an avenue to achieve controllable on-demand hydrogen transfer to and from a clathrate hydrate at a commercially meaningful scale.

As discussed in detail below, the present invention utilises an externally-applied electromagnetic field to promote hydrogen transfer to or from a hydrogen-bearing clathrate hydrates without the need to dissociate the hydrate lattice. Through this technique, the latent heat cost associated with lattice dissociation can be avoided during hydrogen release. Furthermore, by avoiding lattice dissociation, the technique allows for efficient 'recycling' of hydrogen to reload the lattice for subsequent (e.g. long-term or seasonal) storage.

When considering the energy balance of clathrate storage as a long-term, large scale solution, all steps such as compression of hydrogen, cooling hydrogen (and a THF/water solution for mixed hydrate) need to be considered. Of all these steps, latent-heat dissipation is the largest consideration. For example, at 3 MPa operation for mixed THF-H₂ hydrate formation, this would be ~350 kJ/kg, similar to ice, whilst it would be ~300 kJ/kg for pure-H₂ sII hydrate formation. This can be scaled up easily and used in large pressurised chambers. Given Winter-Summer variation in European power demand of ~100 GW, 3 MPa storage of mixed THF-H₂ hydrate at ~1.5 wt% capacity would require only around 35-40 football-pitch-sized storage facilities each ~10 m high, or similarly-sized subterranean salt caverns, with 'blending' of the H₂ into the existing natural-gas transmission network possible. As a means of obtaining a natural contribution to the pressure requirement, underwater storage (preferably in freshwater lakes to avoid possible corrosion problems) merits particular attention.

The principles of the invention are demonstrated below through application of an external electromagnetic field both to a prototype hydrate-formation rig and in a non-equilibrium molecular-dynamics simulation. The discussion below also touches on the microscopic origin of electromagnetic-field enhanced hydrogen release, based on experimental and simulation-based insights, and outlines control strategies for hydrogen release.

At its most general, the disclosure herein provides a method for controlling a release rate of hydrogen gas that is held within a clathrate hydrate structure. As discussed above, the invention is applicable to both pure and mixed hydrates, i.e. hydrates that store only hydrogen and hydrates that store hydrogen in combination with another gas (e.g. THF) that may be present to fill the larger cavities. The method may also be used with propane-hydrogen mixtures. Propane hydrates may form stable lattices at lower pressures (e.g. 1.5 to 2.0 MPa), although the storage capacity of such hydrates increases with pressure, so a balance between pressure costs and stored capacity needs to be struck.

The clathrate hydrate structures may be formed in a conventional manner within a storage vessel subjected to suitable selected temperature and pressure. Hydrogen can diffuse into and be retained by the clathrate hydrate structure. By maintaining the temperature and pressure parameters, hydrogen can be stored within the clathrate hydrate. Depending on the selected temperature and pressure there will be a natural base rate of hydrogen release, typically ~0.13 kg/m³ at 3 MPa and a temperature of ~260 K. The technique disclosed herein teaches applying an electromagnetic field across the vessel to promote release of the hydrogen, i.e. to cause the rate of hydrogen transfer to rise significantly above the base level.

The electromagnetic field may have properties selected to enhance the transfer of hydrogen. The selected properties may include field strength and frequency. As discussed in more detail below, the underlying principle of the invention is to use the external electromagnetic field to stimulate oscillation and "stretching" of the lattice in a manner that effectively widens one or more apertures into each cage for retaining the hydrogen, such that the hydrogen's ability to "hop" out of or between cages is enhanced. The frequency of the electromagnetic field may be selected to be stimulate lattice oscillations that cause desired stretching of the "cages" within the clathrate hydrate structure. For example, the frequency of the electromagnetic field may be of the same order as the natural vibration or libration frequency of the lattice, and in particular of a hexagon facet that makes up each cage within the lattice. The electromagnetic field may be a microwave field, e.g. having a frequency of 1 GHz or more, preferably in the range 1 to 5 GHz, more preferably around 2.45 GHz.

The field intensity (i.e. field strength) itself is selected to stimulate vibrations. Preferably the field intensity is selected to minimise adverse effects on the lattice, such as dissociation. The field intensity may thus be set to be many (e.g. 3 to 5) orders of magnitude less than the intrinsic field within the lattice structure, which is typically of the order of 1-3 V/Å.

The field intensity of the external electromagnetic field may be an adjustable parameter by which the release rate of gas from the clathrate hydrate is controlled. The field intensity may be adjustable within a range from 0.0001% to 1% of the intrinsic field, which may roughly correspond to a range within the range 0.000001 to 0.01 V/Å.

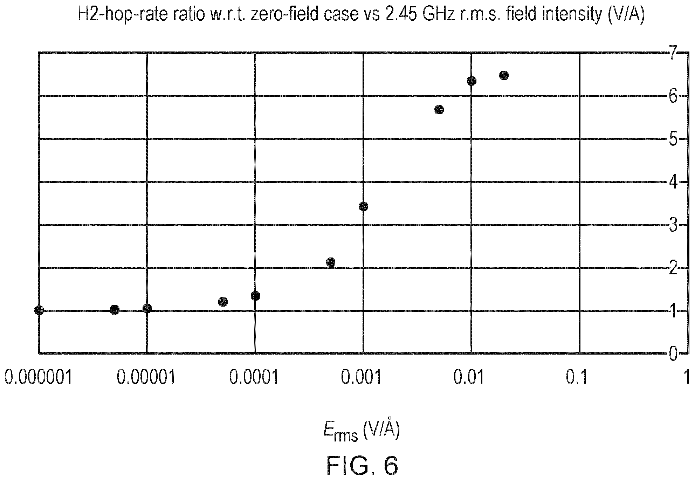

Fig. 6 is a graph that shows how hydrogen release rate varies compared with a zero-field situation for increasing field intensity Eᵣₘₛ. An inter-cage hydrogen hopping rate, which governs the transfer rate of hydrogen into and out of the lattice, increases with field intensity within the range discussed above. For values higher than this range, thermal effects may significantly reduce the energy efficiency of the technique. For values lower than the range, the enhancement of release rate above the base leakage rate (i.e. the zero field situation) is negligible.

The electromagnetic field may be generated by any suitable source, e.g. a magnetron or the like. In one example, the electromagnetic field may be generated by a signal generator having a control module arranged to control the field strength or intensity based on a feedback signal. It may be advantageous to have an intelligently responsive signal generator in order to rapidly react to conditions within the vessel, e.g. to prevent unwanted thermal effects from degrading the hydrate structure or the like. The feedback signal may be derived from a separate temperature and/or pressure monitoring module that is operably connected to the vessel. Alternatively or additionally, the feedback signal may be derived from a signal indicative of rate of gas (e.g. hydrogen) release from the clathrate hydrate.

A particular advantage of the technique outlined above is that the properties of the external electromagnetic field can be selected to minimise dissociation of the clathrate lattice. Thus the release rate of the hydrogen can be controlled on demand without a concomitant adverse impact on the lattice.

Whilst it is known that hydrogen may be crudely released simply by depressurising the lattice, this technique provides little control and cannot preserve the lattice structure in a way that allows it to be reloaded with hydrogen.

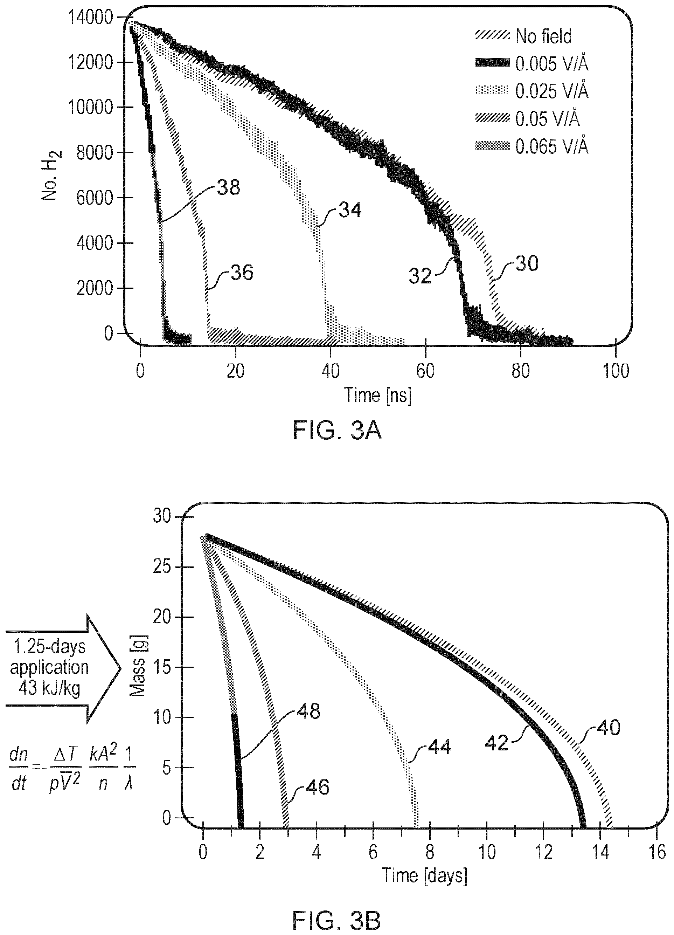

By way of background to the invention, Fig. 3A is a graph showing the results of a non-equilibrium molecular dynamics simulation of hydrogen release from a clathrate hydrate lattice in a range of 2.45 GHz electromagnetic field strengths, as could be delivered by a magnetron or the like.

The simulation for Fig. 3A had an initial set up with ~14,000 hydrogen molecules contained within the lattice, and shows the release rate of the molecules as the lattice is melted by various 2.45 GHz field strengths at 10 K above melting point. Line 30 indicates a zero-field situation for comparison. Line 32 indicates a field strength (r.m.s.) of 0.005 V/Å. Line 34 indicates a field strength of 0.025 V/Å. Line 36 indicates a field strength of 0.05 V/Å. Line 38 indicates a field strength of 0.065 V/Å.

Fig. 3B shows a graph in which the results of Fig. 3A are scaled up over macroscopic times and realistic (i.e. lower) field intensities to provide a prediction for time- and energy-needs associated with clathrate hydrate break up. To do this, the simulation results were fitted with a break-up model shown in Fig. 3B and then scaled using a Transient Time Correlation Function (TTCF) foundation.

The graph in Fig. 3B shows reduction in mass of hydrate over time for each field intensity examples. Line 40 corresponds to a zero-field situation. Line 42 corresponds to the field strength of 0.005 V/Å. Line 44 corresponds to the field strength of 0.025 V/Å. Line 46 corresponds to the field strength of 0.05 V/Å. Line 48 corresponds to the field strength of 0.065 V/Å.

The "minimum energy" case in Fig. 3B corresponds to line 48 (i.e. the 0.065 V/Å (r.m.s.) field intensity). The energy cost associated with release of around 28 g of hydrate in this case is 43 kJ/kg over 1.25 days in a 1 kV/m (10⁻⁷ V/Å) field.

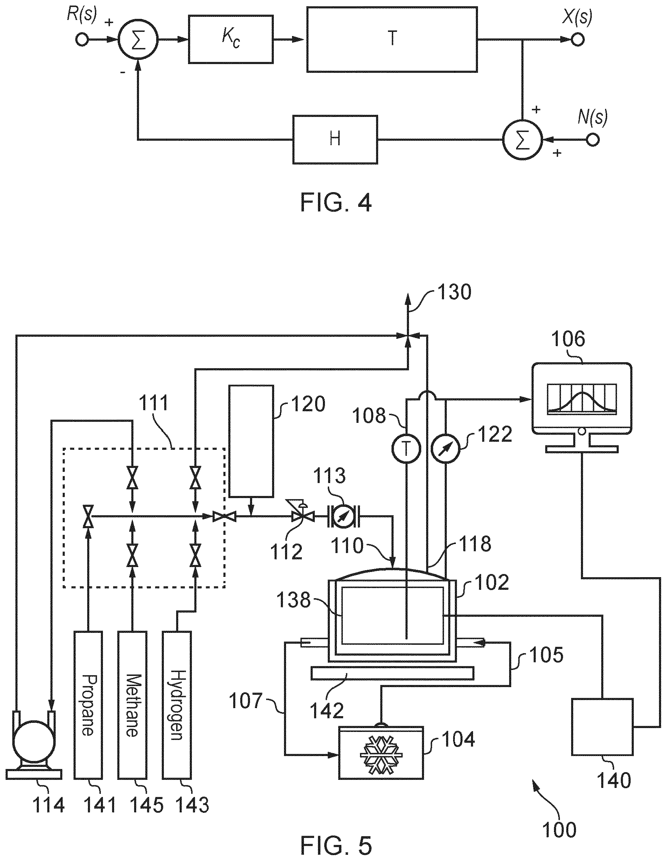

Fig. 4 is a schematic diagram of a feedback control system for hydrogen release of the system disclosed herein. Output parameter X represents a desired quantity of hydrogen desired. The control agent is the applied electromagnetic field applied (intensity and frequency) in the Laplace domain. Parameter N represents background noise (usually negligible) and function block T represents a transfer function of the controlled-dissociation process discussed above, which varies according to electromagnetic field absorption conditions, and can be found from Laplace transformation of the time-domain differential equations mentioned above. Function block H represents a feedback-loop transfer function, which can be approximated as unity, given that there is little time delay in measuring in-line hydrogen release by industry-standard gas gauges. Parameter R represents change in desired set-point for output parameter X, depending on gas-grid-demand fluctuations and typically changing slowly for seasonal applications. Function block K_{c} represents the controller (e.g., PID, etc.) for adjusting the properties of the control agent to yield the desired output. Other control strategies, e.g., wave-based control, could also be employed.

The simulations shown in Fig. 3A and 3B model gas-hydrate dissociation (and the associated on-demand hydrogen release, e.g. for incorporation into the existing gas-transmission grid via 'blending'). In itself, this work shows that the use of clathrate hydrate structure presents an energetically-feasible means of controlling hydrogen release, with manageable latent-heat handling.

However, the disclosure herein goes beyond this work in demonstrating non-dissociation of the clathrate upon exposure to electromagnetic fields with parallel partial hydrogen transfer (i.e. net release or net uptake, depending on the circumstances). This technique enhances the principles outlined above to offer even better control over desired release on-demand, e.g., for use with demand-forecasting without the need/cost to provide for (primarily latent-) heat management. This renders the hydrogen-release process an order of magnitude less in energetic cost, leading to great energy savings.

Using mixed sII propane/hydrogen hydrates, stored initially at 3 MPa (30 bar), with propane in the large cages and hydrogen in the small ones, some ~1.8 kg/m³ or ~0.2 GJ/m³ of hydrogen can be released within 10 hours (corresponding to some ~11-12 % of hydrogen in singly-occupied small cages at an electromagnetic-field and thermal-management energy cost of as low as ~0.027 GJ/m³ in low-intensity e/m fields). Importantly, this can be done in a multiply-recyclable manner (i.e., with subsequent reloading of the hydrate lattice via exposure to higher-pressure hydrogen gas) without break-up of the lattice.

The discussion below explains how this has been achieved both experimentally and via non-equilibrium molecular-dynamics simulation.

Fig. 5 shows a schematic drawing of hydrogen storage and release system 100 that is an embodiment of the invention. The system 100 comprise a vessel 102 for containing the clathrate hydrate under pressurised conditions. In this experiment, the vessel was a 20 MPa (200 bar) rated, 0.3 litre pressure-vessel, but it can be understood that any suitable container can be used, and in particular that the apparatus discussed herein is capable of scaling up to industrial-size systems.

The vessel 102 is provided within a coolant system (e.g. a Julabo refrigeration unit), where flow of a cooling agent around a coolant circuit from a coolant source 104 is controlled to maintain a temperature within the vessel 102. The cooling agent flows along an inflow line 105 and an outflow line 107.

The vessel 102 defines an internal volume for containing the clathrate hydrate. In this example, the internal volume has a gas inlet 110 connected to a gas distribution unit 111, e.g. for introducing a hydrogen gas to be stored within the clathrate hydrate. The hydrogen gas may be supplied to the distribution unit 111 from any suitable source. In Fig. 5, there is a propane source 141, a hydrogen source 143 and a methane source 145. A vacuum pump 114 is connected to the distribution unit 111 to drive gas flow around the circuit, e.g. to purge pipes following the introduction of gas into the vessel.

The temperature of the internal volume can be monitored by a thermocouple 108, which in turn sends a feedback signal to a controller 106 that is operably connected to the coolant source 104. The internal volume is also in fluid communication with pressure monitoring apparatus 122, which is arranged to send a feedback signal to the controller 106.

The gas inlet 110 has attached to it a valve 112 for prevent back flow from the vessel and a flowmeter 113 for measuring a flow rate of gas introduced into the internal volume. The internal volume may also have a liquid inlet (not shown) for introducing the liquid (e.g. water) used to form the clathrate structure. The liquid inlet may include its own control valve. In other arrangements, the liquid may be introduced into the vessel through a top surface therefore, which is then closed by a suitable cover. The gas inlet 110 may be in the cover.

In use, gases are supplied to the vessel through the distribution unit, with line-cleaning before purging the desired gas, by way of mass-flow controller and accurate measurement of gas loading into the internal volume (which in this example is pre-loaded with the liquid to form the lattice of the clathrate hydrate). The system can operates under either isobaric or constant-gas-mole-number modes, with a back-pressure cylinder 120 for isobaric operation. For the constant-mole-number case, the inlet valve 112 is closed upon reaching the desired pressure. Pressure can be logged digitally via the pressure gauge 122 periodically (e.g. every 2 to 10 seconds).

The internal volume further has an outlet 118 extending from a upper side thereof. The outlet 118 is in fluid communication with a gas release pipe 130. Gas released from the clathrate hydrate and other exhaust gases can flow through the outlet 118 and be directed for further use via the gas release pipe 130.

In this example, the vessel 102 is mounted on a rocker mechanism 142 for agitating the contents of the internal volume (e.g. at a frequency of 30 Hz or the like) to facilitate formation of the clathrate lattice. A magnetic stirrer may also be provided to agitate fluid within the internal volume, thereby enabling a fast rate of hydrate formation via mass transfer and diffusion. Although these components assist in forming the clathrate, they may not be essential for operation of the invention.

To apply an electromagnetic field within the internal volume, one or more planar conductive coils 138 are disposed in or around the internal volume. In this example there are three planar coils distributed in a vertical orientation within the internal volume, but it can be understood that any suitable distribution of radiating elements may be used having regard to the size and shape of the internal volume of the vessel being used.

The coils are electrically connected to a field generator 140, e.g. a magnetron or the like, via high-a current electrical isolation valves or glands (not shown) for safety. This arrangement allows exposure of the vessel interior to roughly uniform electromagnetic fields in the microwave-frequency range. With this system, it was possible to study the effect of low-intensity electromagnetic field exposure in terms of hydrogen liberation without any dissociation of the hydrate. The field generator 140 is communicably connected to the controller 106 to allow adjustment of the field strength based on the detected temperature and pressure.

By agitation on the rocker, a pure propane hydrate was prepared at ~260 K at initial 5.5 bar 99.5 % pure-propane exposure, using 100 ml of deionised water in contact with propane. Changes in temperature and pressure monitored by the thermocouple 108 and pressure gauge 122 were used to confirm the formation of gas hydrates. Data-acquiring software was used to register/record pressure evolution as a function of time, to show the take-up or release of gas. By evolution of the gas-phase pressure, it was found that there was -90 % of maximum theoretical occupancy (based on large-cavity occupation in sII hydrate).

Upon exposure to hydrogen, a similar occupancy ratio was found for hydrogen in the now-mixed hydrate (based on single occupation of sII small cavities). By setting pressure to 3 MPa and maintaining temperature at ~260 K with refrigeration-thermostatting control, the sample was then exposed to a 2.45 GHz electromagnetic field with estimated field intensity of ~265 V/m.

Based on recorded pressure evolution, this step led to the release of ~1.8 kg/m³ or ~0.2 GJ/m³ of hydrogen within 10 hours. This corresponds to ~11-12 % of the hydrogen stored in singly-occupied small cages. The energy cost of the electromagnetic field generation and refrigeration-thermostatting control was around ~0.027 GJ/m³.

This release rate compares to only ~0.13 kg/m³ released with initial 3 MPa storage pressure under zero-field conditions.

After the experiment, the hydrate was weighed, and no dissociation of the lattice was confirmed: the mass measurements correlated with pressure-in-fixed volume rise in terms of the liberated hydrogen gas. This offers prima facie proof-of-concept evidence of the viability of the proposed energy-efficient scheme, which can easily be incorporated with a control system for hydrogen-demand management as discussed above with reference to Fig. 4.

Upon exposure to higher-pressure hydrogen gas after electromagnetic field-mediated partial release of hydrogen, it was found that the hydrogen could be 'recycled', or `reloaded', into the lattice again and the e/m-field exposure and partial release repeated with reasonable reproducibility.

For non-equilibrium MD, a TIP4P-2005 water model was used for intermolecular water-water interactions. The charge and Lennard-Jones (LJ) parameter-set defined by Alavi et al. in Molecular-dynamics study of structure II hydrogen clathrates (J Chem Phys 2005, 123: 024507) was used for intermolecular H₂-H₂, together with their combining rules for water-H₂. These intermolecular potentials have proven reasonable for describing hydrate structural, dynamical and H₂-diffusion properties, making calculations with these models useful for comparison with previous studies. It has also been shown that the Alavi intermolecular water-H₂ surface can give good predictions of the measured incoherent neutron scattering data for various transitions. Also, it has been shown that TIP4P-2005 provides reasonable agreement with neutron-scattering derived phonon spectra for sI and sII hydrates.

All simulations used a 5×5×5 sII propane-H₂ clathrate hydrate unit cell (with single occupation of small cages by H₂) with vanishingly-small dipole, in contact with an equivalent volume of free space in the laboratory z-axis, under periodic boundary conditions, with the lattice 110 surface orientation towards the vacuum layer. In the simulation, electromagnetic fields having a frequency of 2.45 GHz were applied using the TTCF approach at a r.m.s. intensity of 2.65 kV/m over 0.5 µs, while the temperature was maintained under NVT conditions with a Ewald electrostatics and Nosé-Hoover thermostat set at 0.5 ps and 260 K.

The initial pressure was set at ~3 MPa and the hydrate remained stable throughout, but the release rate stabilised at only about three times higher than the experimental one (when rescaled for field intensity and exposure time). This indicates the utility of NEMD to capture the essential details semi-quantitatively of electromagnetic-field-enhanced H₂ hopping release mechanisms. It was observed that the modus operandi of this process lies in roto-translational coupling, in that the water dipoles' rotational coupling and oscillation with the applied field enhances the librational (rotation-oscillation) dynamics of the cage faces in the sII lattice. This causes larger-amplitude 'stretching' of the cage faces allows for enhanced 'squeezing' through the cages (lowering the free-energy barriers for inter-cage migration), and enhancing H₂-hopping diffusion and, ultimately, partial H₂ release from the hydrate itself.

Based on non-equilibrium molecular dynamics (NEMD) simulation and experimental evidence, the disclosure herein provides a method and apparatus for electromagnetic-field controlled hydrogen release from clathrate hydrates (especially lower-pressure mixed hydrates). The especially exciting discovery is the possibility of non-dissociation of the lattice, and re-loading and re-cycling of hydrogen for repeated cycles, thereby enabling energy-efficient and easily-controlled partial hydrogen release to manage grid demand. This accelerates kinetics substantially, and obviates the need for energy- and operationally- demanding heat management.

## Claims

1. A method for releasably storing hydrogen gas, the method comprising:
forming a clathrate hydrate structure within a storage volume, the clathrate hydrate structure comprising a lattice having a plurality of gas molecule retaining cavities in which molecules of hydrogen gas to be stored are trapped; and
applying an electromagnetic field to the storage volume to controllably transfer the hydrogen gas from or to the clathrate hydrate structure, wherein a field strength of the electromagnetic field is selected to avoid dissociation of the clathrate hydrate structure.

2. A method according to claim 1, wherein the electromagnetic field is a microwave electromagnetic field.

3. A method according to claim 1 or 2 including adjusting a field strength of the electromagnetic field to control a transfer rate of the hydrogen gas from or to the clathrate hydrate structure.

4. A method according to claim 3, wherein the field strength of the electromagnetic field is non-zero and adjustable in a range up to 1% of an intrinsic field of the clathrate hydrate structure lattice.

5. A method according to claim 3, wherein a root mean square amplitude of the field strength of the electromagnetic field is adjustable within the range 0.000001 to 0.01 V/Å.

6. A method according to any preceding claim, wherein a field strength of the electromagnetic field is three or more magnitudes less than an intrinsic field of the clathrate hydrate structure lattice.

7. A method according to any preceding claim, wherein the electromagnetic field is applied in a pulsed manner.

8. A method according to any preceding claim including monitoring temperature and pressure conditions in the storage volume.

9. A method according to claim 8 including determining a release rate of the hydrogen gas based on the temperature and pressure conditions, and providing a feedback signal for controlling the electromagnetic field based on the determined release rate.

10. A method according to claim 8 or 9 including detecting a temperature in the storage volume, and operating a coolant system based on the detected temperature to control the temperature condition in the storage volume.

11. A method according to any preceding claim, wherein the clathrate hydrate comprises an sII polymorph lattice structure having a plurality of larger gas molecule retaining cavities, and a plurality of smaller gas molecule retaining cavities occupied by the hydrogen gas, wherein the plurality of larger gas molecule retaining cavities are occupied by propane, methane or carbon dioxide.

12. An apparatus (100) for releasably storing hydrogen gas, the apparatus comprising:
a pressure vessel (102) defining a storage volume;
a clathrate hydrate structure contained in the storage volume under pressurised conditions, the clathrate hydrate structure comprising a lattice having a plurality of gas molecule-retaining cavities in which molecules of hydrogen gas to be stored are trapped;
an electromagnetic field generator (140) having one or more field emitters arranged to emit a substantially uniform electromagnetic field across the storage volume to controllably release the hydrogen gas from the clathrate hydrate structure; and
an outlet (118) communicably connectable with the storage volume to permit the released hydrogen gas to exit the vessel,
wherein a field strength of the electromagnetic field is selected to avoid dissociation of the clathrate hydrate structure.

13. An apparatus according to claim 12 including a controller (106) arranged to selectively adjust a field strength of the electromagnetic field to control a release rate of the hydrogen gas from the clathrate hydrate structure.

14. An apparatus according to claim 13 including:
a temperature sensor arranged to monitor a temperature of the storage volume; and
a pressure sensor arranged to monitor a pressure of the storage volume,
wherein the temperature sensor and pressure sensor are communicably connected to the controller, whereby the controller is arranged to adjust the field strength of the electromagnetic field based on detected temperature and pressure conditions in the storage volume.

15. An apparatus according to any one of claims 12 to 14 including a rocker mechanism (142) arranged to agitate the vessel to promote clathrate hydrate formation.

## Patentansprüche

1. Verfahren zum freisetzbaren Speichern von Wasserstoffgas, wobei das Verfahren Folgendes umfasst:
Ausbilden einer Clathrathydratstruktur innerhalb eines Speichervolumens, wobei die Clathrathydratstruktur ein Gitter mit einer Vielzahl von Gasmoleküle enthaltenden Hohlräumen umfasst, in denen zu speichernde Wasserstoffgasmoleküle eingefangen sind; und
Anlegen eines elektromagnetischen Feldes an das Speichervolumen, um das Wasserstoffgas steuerbar von der oder in die Clathrathydratstruktur zu übertragen, wobei die Feldstärke des elektromagnetischen Feldes so gewählt wird, dass eine Dissoziation der Clathrathydratstruktur vermieden wird.

2. Verfahren nach Anspruch 1, wobei das elektromagnetische Feld ein elektromagnetisches Mikrowellenfeld ist.

3. Verfahren nach Anspruch 1 oder 2, welches das Einstellen der Feldstärke des elektromagnetischen Feldes umfasst, um die Übertragungsrate des Wasserstoffgases von der oder in die Clathrathydratstruktur zu steuern.

4. Verfahren nach Anspruch 3, wobei die Feldstärke des elektromagnetischen Feldes nicht null ist und in einem Bereich bis zu 1 % eines intrinsischen Feldes des Clathrathydratstrukturgitters einstellbar ist.

5. Verfahren nach Anspruch 3, wobei das quadratische Mittel der Amplitude der Feldstärke des elektromagnetischen Feldes innerhalb des Bereichs von 0,000001 bis 0,01 V/A einstellbar ist.

6. Verfahren nach einem der vorangegangenen Ansprüche, wobei die Feldstärke des elektromagnetischen Feldes drei oder mehr Größenordnungen kleiner ist als ein intrinsisches Feld des Clathrathydratstrukturgitters.

7. Verfahren nach einem der vorangegangenen Ansprüche, wobei das elektromagnetische Feld auf gepulste Weise angelegt wird.

8. Verfahren nach einem der vorangegangenen Ansprüche, welches das Überwachen der Temperatur- und Druckbedingungen im Speichervolumen umfasst.

9. Verfahren nach Anspruch 8, welches das Bestimmen einer Freisetzungsrate des Wasserstoffgases basierend auf den Temperatur- und Druckbedingungen umfasst und ein Rückkopplungssignal zur Steuerung des elektromagnetischen Feldes basierend auf der bestimmten Freisetzungsrate bereitstellt.

10. Verfahren nach Anspruch 8 oder 9, welches das Detektieren einer Temperatur im Speichervolumen und das Betreiben eines Kühlsystems basierend auf der detektierten Temperatur umfasst, um die Temperaturbedingung im Speichervolumen zu steuern.

11. Verfahren nach einem der vorangegangenen Ansprüche, wobei das Clathrathydrat eine sll-polymorphe Gitterstruktur mit einer Vielzahl von größere Gasmoleküle enthaltenden Hohlräumen und einer Vielzahl von kleinere Gasmoleküle enthaltenden Hohlräumen, die vom Wasserstoffgas eingenommen werden, umfasst, wobei die Vielzahl von größere Gasmoleküle enthaltenden Hohlräumen von Propan, Methan oder Kohlendioxid eingenommen werden.

12. Vorrichtung (100) zur freisetzbaren Speicherung von Wasserstoffgas, wobei die Vorrichtung Folgendes umfasst:
einen Druckbehälter (102), der ein Speichervolumen definiert;
eine Clathrathydratstruktur, die im Speichervolumen unter Druckbedingungen enthalten ist, wobei die Clathrathydratstruktur ein Gitter mit einer Vielzahl von Gasmoleküle enthaltenden Hohlräumen umfasst, in denen zu speichernde Wasserstoffgasmoleküle eingefangen sind;
einen Generator eines elektromagnetischen Feldes (140) mit einem oder mehreren Feldemittern, die angeordnet sind, um ein im Wesentlichen gleichförmiges elektromagnetisches Feld über das Speichervolumen zu emittieren, um das Wasserstoffgas steuerbar aus der Clathrathydratstruktur freizusetzen; und
einen Auslass (118), der kommunikationsfähig mit dem Speichervolumen verbindbar ist, um zu ermöglichen, dass das freigesetzte Wasserstoffgas aus dem Behälter austritt,
wobei die Feldstärke des elektromagnetischen Feldes so gewählt wird, dass eine Dissoziation der Clathrathydratstruktur vermieden wird.

13. Vorrichtung nach Anspruch 12, die eine Steuerung (106) umfasst, die angeordnet ist, um die Feldstärke des elektromagnetischen Feldes selektiv anzupassen, um die Freisetzungsrate des Wasserstoffgases aus der Clathrathydratstruktur zu steuern.

14. Vorrichtung nach Anspruch 13, die Folgendes umfasst:
einen Temperatursensor, der angeordnet ist, um die Temperatur des Speichervolumens zu überwachen; und
einen Drucksensor, der angeordnet ist, um den Druck des Speichervolumens zu überwachen,
wobei der Temperatursensor und der Drucksensor kommunikationsfähig mit der Steuerung verbunden sind, wodurch die Steuerung angeordnet ist, um die Feldstärke des elektromagnetischen Feldes basierend auf den detektierten Temperatur- und Druckbedingungen im Speichervolumen anzupassen.

15. Vorrichtung nach einem der Ansprüche 12 bis 14, die einen Schüttelmechanismus (142) umfasst, der angeordnet ist, um den Behälter zu schütteln, um eine Clathrathydratbildung zu fördern.

## Revendications

1. Procédé de stockage libérable d'hydrogène gazeux, le procédé comprenant les étapes consistant à :
former une structure d'hydrate de clathrate à l'intérieur d'un volume de stockage, la structure d'hydrate de clathrate comprenant un réseau présentant une pluralité de cavités de rétention de molécules de gaz dans lesquelles des molécules d'hydrogène gazeux à stocker sont piégées ; et
appliquer un champ électromagnétique au volume de stockage pour transférer de manière commandable l'hydrogène gazeux depuis ou vers la structure d'hydrate de clathrate, dans lequel une intensité de champ du champ électromagnétique est sélectionnée pour éviter une dissociation de la structure d'hydrate de clathrate.

2. Procédé selon la revendication 1, dans lequel le champ électromagnétique est un champ électromagnétique hyperfréquence.

3. Procédé selon la revendication 1 ou 2, incluant un ajustement d'une intensité de champ du champ électromagnétique pour commander un taux de transfert de l'hydrogène gazeux depuis ou vers la structure d'hydrate de clathrate.

4. Procédé selon la revendication 3, dans lequel l'intensité de champ du champ électromagnétique est non nulle et ajustable dans une plage allant jusqu'à 1 % d'un champ intrinsèque du réseau de structure d'hydrate de clathrate.

5. Procédé selon la revendication 3, dans lequel une amplitude quadratique moyenne de l'intensité de champ du champ électromagnétique est ajustable dans la plage de 0,000001 à 0,01 V/A.

6. Procédé selon l'une quelconque des revendications précédentes, dans lequel une intensité de champ du champ électromagnétique est inférieure d'une amplitude de trois ou plus à un champ intrinsèque du réseau de structure d'hydrate de clathrate.

7. Procédé selon l'une quelconque des revendications précédentes, dans lequel le champ électromagnétique est appliqué de manière pulsée.

8. Procédé selon l'une quelconque des revendications précédentes, incluant une surveillance des conditions de température et de pression dans le volume de stockage.

9. Procédé selon la revendication 8, incluant une détermination d'un taux de libération de l'hydrogène gazeux sur la base des conditions de température et de pression, et une fourniture d'un signal de rétroaction pour commander le champ électromagnétique sur la base du taux de libération déterminé.

10. Procédé selon la revendication 8 ou 9, incluant une détection d'une température dans le volume de stockage, et un actionnement d'un système de refroidissement sur la base de la température détectée pour commander la condition de température dans le volume de stockage.

11. Procédé selon l'une quelconque des revendications précédentes, dans lequel l'hydrate de clathrate comprend une structure de réseau polymorphe sII présentant une pluralité de cavités de rétention de molécule de gaz plus grandes, et une pluralité de cavités de rétention de molécule de gaz plus petites occupées par l'hydrogène gazeux, dans lequel la pluralité de cavités de rétention de molécule de gaz plus grandes sont occupées par du propane, du méthane ou du dioxyde de carbone.

12. Appareil (100) pour stocker de manière libérable de l'hydrogène gazeux, l'appareil comprenant :
un récipient sous pression (102) définissant un volume de stockage ;
une structure d'hydrate de clathrate contenue dans le volume de stockage dans des conditions sous pression, la structure d'hydrate de clathrate comprenant un réseau présentant une pluralité de cavités de rétention de molécules de gaz dans lesquelles des molécules d'hydrogène gazeux à stocker sont piégées ;
un générateur de champ électromagnétique (140) présentant un ou plusieurs émetteurs de champ agencés pour émettre un champ électromagnétique sensiblement uniforme à travers le volume de stockage pour libérer de manière commandable l'hydrogène gazeux à partir de la structure d'hydrate de clathrate ; et
une sortie (118) pouvant être connectée en communication avec le volume de stockage pour permettre à l'hydrogène gazeux libéré de sortir du récipient,
dans lequel une intensité de champ du champ électromagnétique est sélectionnée pour éviter une dissociation de la structure d'hydrate de clathrate.

13. Appareil selon la revendication 12, incluant un dispositif de commande (106) agencé pour ajuster sélectivement une intensité de champ du champ électromagnétique pour commander un taux de libération de l'hydrogène gazeux depuis la structure d'hydrate de clathrate.

14. Appareil selon la revendication 13, incluant : un capteur de température agencé pour surveiller une température du volume de stockage ; et
un capteur de pression agencé pour surveiller une pression du volume de stockage,
dans lequel le capteur de température et le capteur de pression sont connectés en communication au dispositif de commande, moyennant quoi le dispositif de commande est agencé pour ajuster l'intensité de champ du champ électromagnétique sur la base de conditions de température et de pression détectées dans le volume de stockage.

15. Appareil selon l'une quelconque des revendications 12 à 14, incluant un mécanisme à bascule (142) agencé pour agiter le récipient afin de favoriser la formation d'hydrate de clathrate.
